# EUROPÄISCHE PATENTSCHRIFT

(11) **EP 2 013 652 B1**
(45) Veröffentlichungstag und Bekanntmachung des Hinweises auf die Patenterteilung: **28.12.2011**
(21) Anmeldenummer: 07723836.8
(22) Anmeldetag: 30.03.2007
(51) Int. Cl.: G02B 7/00

(54) **FARBRAD**
COLOUR WHEEL
ROUE DE COULEURS

(30) Priorität: 02.05.2006 DE 102006020648
(43) Veröffentlichungstag der Anmeldung: 14.01.2009
(73) Patentinhaber: Oerlikon Trading AG, Trübbach, 9477 Trübbach (CH)
(72) Erfinder: MILBOURNE, Michael, John, Los ALtos,CA 94022 (US); ZUEGER, Othmar, FL-9495 Triesen (LI)
(74) Vertreter: Kempkens, Anke
(86) Internationale Anmeldenummer: PCT/EP2007/002895
(87) Internationale Veröffentlichungsnummer: WO 2007/124829

(56) Entgegenhaltungen:
- US-A- 5 868 482
- US-A1- 2002 012 111
- US-A1- 2004 066 495
- US-A1- 2006 087 756

## Beschreibung

Die vorliegende Erfindung bezieht sich auf Farbräder und Projektoren, in denen Farbräder zur Anwendung kommen um eine farbsequentielle Beleuchtung zu generieren. Die vorliegende Erfindung bezieht sich auch auf die Herstellung solcher Farbräder.

Farbräder der vorgenannten Art werden generell in Anwendungen verwendet, bei denen in schneller Abfolge Farbänderungen benötigt werden. Beispiel für Anwendungen, die solche Bauteile verwenden sind unter anderem Bildgeneratoren oder Display-Anordnungen. Rück- oder Frontprojektionssysteme für Fernseher sind typische Anwendungen.

Um eine schnelle Abfolge von Farbänderungen zu generieren, werden in schneller Abfolge abwechselnd unterschiedliche Farbfilter in den optischen Weg eingesetzt. Um dies zu bewerkstelligen, wird typischerweise ein scheibenförmiges Element verwendet, das an seiner Peripherie mit zirkular angeordneten Filtersegmenten ausgestattet ist, wodurch ein Ring geformt wird.

In der mathematischen Geometrie kann ein Kreissegment als eine Fläche umschrieben werden, die mittels einer Sekante vom Rest einer Kreisfläche abgeschnitten wurde. Das Kreissegment ist diejenige Fläche, die nicht den Kreismittelpunkt umfasst und die zwischen der Sekante und einem der durch die Sekante definierten Kreisbögen liegt.

Demgegenüber wird das Wort Segment im Zusammenhang mit der vorliegenden Beschreibung für eine geometrische Form verwendet, die im mathematischen Sinne wohl eher als Sektor eines Ringes bezeichnet würde, der mit einem äußeren Kreisbogen und einem inneren Kreisbogen und zwei radialen Kanten ausgestattet ist. Der innere Kreisbogen des Segmentes im Sinne der vorliegenden Erfindung kann modifiziert sein und daher beträchtlich von dem inneren Kreisbogen des ursprünglichen Ringes abweichen. Es kommt sogar vor, dass der innere Kreisbogen gar nicht die Form eines Kreisbogens besitzt.

Der Farbring wird um die zentrale Achse rotiert. Durch schnelle Rotation des Farbringes werden die Filtersegmente periodisch in den optischen Weg hinein und auch wieder herausgefahren und ein schneller Farbwechsel erzeugt. Um diese Rotation zu bewerkstelligen, wird der Farbring an einem Motor befestigt. Farbring und Motor bilden dann das Farbrad.

Soll die Bilderzeugungsvorrichtung in der Lage sein in hoch qualitativer Weise Bilder oder Filme zu projizieren, so muss der Farbwechsel in sehr schneller Abfolge vor sich gehen. Das bedeutet dass die Filtersegmente sehr schnell durch den optischen Weg bewegt werden müssen, d.h. die schnelle Rotation des Ringes ist zwingend. Als Folge werden große Kräfte aufgrund von Beschleunigungen, die die Erdbeschleunigung g einige hundert Mal übertreffen, auf den Farbring, und insbesondere auf die empfindlichen Filter ausgeübt. Für speziell gute Qualität in der Bildprojektion können diese Beschleunigungen sogar 1000g überschreiten. Es kommt hinzu, dass die radiale Auswuchtung des Bauteils sehr gut sein muss, um eine große Funktionslebensdauer zu erzielen. An die Bildprojektoren werden auch sehr hohe Anforderungen in Bezug auf Bildhelligkeit gestellt, die nur mit leistungsstarken Lichtquellen erfüllt werden kann. Aufgrund dieser starken Lichtquellen wird der Farbring dementsprechend hohen Temperaturen von bis zu 100°C ausgesetzt.

Auf der anderen Seite müssen diese Produkte oftmals Temperaturen bis zu -20°C und darunter aushalten. Dies ist oft der Fall, wenn die Produkte vor dem Verkauf gelagert werden. Zusätzlich, zum Beispiel während des Transportes in die Länder in denen die Projektoren, und mit ihnen die Farbräder, verkauft werden, müssen diese niedrigen Temperaturen ausgehalten werden. Hierbei kommt es oftmals zu Temperaturen von -40°C oder darunter.

Aus diesem Grund muss die Kraft, mit der die Filtersegmente gehalten werden, als auch die Filterstabilität sehr anspruchsvolle Anforderungen erfüllen.

Ihre Verwendung auf breiter Skala in Display-Anwendungen im sogenannten Niedrigpreissektor wird lediglich dann denkbar, wenn es möglich wird das Farbrad bei sehr niedrigen Kosten, aber dennoch hohen Qualitätsanforderungen herzustellen.

Ein Farbrad zur Verwendung in einem Bildprojektor mit kreisförmig angeordneten Filtersegmenten wird in EP 0 615 146 A2 beschrieben. In diesem Bauteil sind die Filtersegmente auf einem Glassring montiert. Ein Nachteil dieses optischen Elementes beruht auf der Tatsache, dass, wenn es in den optischen Weg eingesetzt wird, Licht mit hoher Intensität durch einen Bereich transmittieren muss, der Klebstoff umfasst. Die meisten Klebstoffe halten eine solche Intensität nicht aus. Es ist ein weiterer Nachteil dieser Anordnung, dass der Glasring teuer ist. Es kommt hinzu, dass präzise radiale Auswuchtung schwierig erreicht werden kann. Der Glasring führt zu zusätzlichen Lichtverlusten, wodurch das gesamte Bauteil ineffizienter wird.

Zusätzlich sind Anordnungen von Farbrädern bekannt, die Befestigungselemente wie zum Beispiel Rahmen oder Speichen zwischen den Segmenten, aufweisen. Allerdings verkleinern diese die Gesamtwerte der Transmission des Farbrings und beschränken dabei die Effizienz. In einem alternativen Ansatz ragen Speichen oder speichenartige Elemente nicht in den Bereich der Segmente hinein, der in den optischen Weg platziert werden soll, wodurch es keinen Effekt auf die Gesamttransmission gibt. Allerdings müssen solche Speichen oder speichenartige Elemente derart auf einem scheibenförmigen Träger angeordnet werden, dass sie der Zahl und der Winkelausdehnung der Filtersegmente angepasst sind. Die Zahl und die Größe dieser Segmente sind aber oftmals kundenspezifisch, was bedeutet, dass für jedes neue Projektormodell diese scheibenförmigen Träger angepasst werden müssen. Damit ist eine unter Kostengesichtpunkten negative Änderung im Design notwendig. Dies gilt auch für Anforderungen, die Rahmen für die Filtersegmente aufweisen.

In US 5,868,482 werden die planaren Filtersegmente auf die Peripherie eines scheibenförmigen Trägers derart angeklebt, dass die ringförmige transparente Fläche zwischen den Filtersegmenten in Rotationsrichtung nicht durch Materialien unterbrochen wird, die nicht optisch transparent sind. Die Farbfiltersegmente sind über die Oberfläche an den Träger in streifenartigen Zonen gebunden, die in Richtung Rotationsachse zeigen. Die Verklebung der Oberfläche erstreckt sich lediglich über einen schmalen Ringzonenbereich in Richtung Rotationszentrum, so dass ein Grossteil der Oberfläche der Filtersegmente, radial gesehen, von der Rotationsachse in den Aussenraum, frei als transparente kreisringförmige nutzbare Zone verbleibt. Zusätzliche Befestigungselemente für die Öffnungen, wie zum Beispiel Löcher in den Filtern, können vollständig vermieden werden.

Niedrige Betriebsgeschwindigkeiten liegen im Bereich von 4000 Umin bis <10000 Umin und betragen typischerweise um die 7200 Umin. Hohe Betriebsgeschwindigkeiten liegen im Bereich von 10000 Umin bis 25000 Umin und liegen typischerweise bei 14400 Umin.

Abhängig von der Betriebsgeschwindigkeit ist die Wahl des Klebstoffes der zum Kleben der Farbfiltersegmente an den Träger verwendet wird, von besonderem Interesse.

Weiche Klebstoffe neigen dazu, zu delaminieren, wenn die Geschwindigkeiten hoch sind. Stressuntersuchungen haben gezeigt, dass starre Klebstoffe zu Ausfällen aufgrund von Glasbruch führen können, wenn die Lagerung bei kalten Temperaturen simuliert wird. Eine der Hypothesen führt die Frage, wieso es zum Bruch kommen kann, auf den Unterschied in den Wärmeausdehungskoeffizienten (CTE = coefficient of thermal expansion) des Segmentmaterials und des Materials des Trägers zurück.

US 2004/0066495 schlägt eine Anordnung mit einem äußeren Ring vor. Wie dort beschrieben sind die Filter aneinander befestigt in einer Art und Weise, dass sie eine kreisrunde Scheibe umgeben. Unglücklicherweise bedeutet dies, dass der innere Radius der Filtersegmente dem äußeren Radius der kreisrunden Scheibe folgen muss. Es kommt hinzu, dass gemäß der Beschreibung erst ein kreisförmiges Farbrad dadurch geschaffen wird, dass die Filter an der kreisförmigen Scheibe fixiert werden. In einem zweiten Schritt wird das Farbrad in die Aufnahmerille des äußeren Ringes platziert. Es muss daher der äußere Ring mit etwas Toleranz produziert werden, was zu Spalten zwischen dem Ring und der äußeren Kante der Filtersegmente führt.

In US 2004/0066495 wird nichts über Materialien und CTEs gesagt. Typischerweise hat die kreisförmige Scheibe im Vergleich zu den Filtersegmenten einen größeren CTE. Abkühlen und/oder Erhitzen des Bauteils zwischen -20°C und 100°C wird daher mit hoher Wahrscheinlichkeit zu Mikrobrüchen im Glas führen.

Wenn das Farbrad mit hoher Geschwindigkeit rotiert, wirken starke Zentrifugalkräfte auf die Segmente. Da sie an der kreisförmigen Scheibe fixiert sind, wirken diese als Dehnungskräfte. Typischerweise wird der äußere Ring aus Material geformt, das einen höheren CTE als das Material der Filtersegmente hat. Filtersegmente sind typischerweise Glassegmente und Ringmaterialien mit gleichgroßem oder niedrigerem CTE sind schwierig zu finden.

Wenn aber der CTE des Ringmaterials größer als der CTE der Filtersegmente ist, dann führt die Rotation bei hoher Temperatur wie in US 2004/0066495 beschrieben dazu, dass der Ring sich mehr ausdehnt als die Filtersegmente. Daher wird der an den Filtersegmenten befestigte äußere Ring die Segmente zusätzlich dehnen und ein Brechen der Filtersegmente wird eher noch wahrscheinlicher.

Auch in US 5,868,482 im letzten Paragraphen wird erwähnt, dass als zusätzliches Schutzelement ein Schutzring an der äußeren Kante der Filtersegmente angeordnet werden kann. Es ist nicht spezifiziert, welche Art von Schutz dieser Ring geben soll. Es ist auch nicht genauer beschrieben, ob, und falls ja, wie der äußere Ring an den Filtersegmenten befestigt ist. In US 5,868,482 wird dies als Möglichkeit lediglich für weniger kritische Anforderungen beschrieben, wobei die Filter mit elastischem Material zwischen den Träger und den Aus dem Grund gibt es ein Bedürfnis für ein Farbrad, basierend auf typischen Materialien und geeignet für Anwendungen mit hoher Rotationsgeschwindigkeit, das Temperaturbereiche von -20°C bis zu mindestens 80°C aushält ohne Schaden zu nehmen.

In der US 2006/087756 A1 wird ein Farbrad mit Motor und daran angeordnetem Farbring offenbart, wobei der Farbring einen Schaft, einen Träger und eine Anzahl von Filtersegmenten umfasst. Der Träger hat die Gestalt eines äusseren Ringes in dem die Filtersegmente fest montiert sind.

Auch in der US 2002/012111 A1 wird ein Farbrad offenbart welches mit einem Unfangsring ausgestattet ist welcher die Glassegmente trägt und nur schwer zu beschädigen ist.

Es ist daher die Aufgabe der vorliegenden Erfindung, ein solches Farbrad zu Verfügung zu stellen sowie dessen Herstellung zu offenbaren.

Die Aufgabe kann erfindungsgemäß dadurch gelöst werden, indem die vorbekannte Lösung mit äußerem Ring modifiziert wird. Gemäß der vorliegenden Erfindung sollten die vorbekannten Farbräder dahingehend abgeändert werden, dass die Dehnung, die auf die Farbräder während der Rotation ausgeübt wird in eine Kompression übergeht.

Dies wird durch ein Farbrad nach Anspruch 1 erreicht.

Das Farbring umfasst einen Schaft zur Rotation des Ringes, wobei der Schaft eine zentrale Achse aufweist, um welche er rotiert werden kann. Der Schaft sollte so am Farbring angeordnet sein, dass die Filtersegmente bei Rotation des Farbrings radiale kompressive Kräfte erfahren.

Es gibt mindestens drei Möglichkeiten dies zu verwirklichen.

Die erste Möglichkeit besteht darin, einen Kontakt zwischen äußerem Ring und Filtersegmenten vorzusehen, der deutlich härter ist als die Härte des Kontaktes zwischen den Filtersegmenten und dem Schaft.

Mit einem nachgiebigen Kontakt zwischen Schaft und Segmenten wird erreicht, dass die Segmente bei Rotation in den Träger gepresst werden. Es ist hier anzumerken, dass in diesem Fall der Träger ein äußerer Ring ist und nicht der Schaft.

Je höher die Rotationsgeschwindigkeit sein wird, umso höher wird der Druck auf den äußeren Ring sein. Durch die Rotation werden nun allerdings kompressive Kräfte auf die Segmente ausgeübt und ein Bruch der Filtersegmente wird unwahrscheinlich.

In der extremen Ausführungsform dieser Lösung sind die Filtersegmente lediglich am äußeren Ring fixiert und die Kanten der Segmente in engem Kontakt zu diesem Ring während sie lediglich locker zwischen Merkmalen am Schaft eingepackt sind. Um ein solches Farbrad zusammenzubauen wird der Farbring dadurch hergestellt, dass die Filtersegmente am äußeren Ring fixiert werden, bevor der Schaft am Ring angeordnet wird.

Die zweite Möglichkeit die Dehnungskräfte innerhalb der Filtersegmente zu reduzieren, zu eliminieren oder in Kompression umzuwandeln besteht darin, das Farbrad so zu montieren, dass im Ring, wenn dieser nicht rotiert, bereits Kompression auf die Filtersegmente ausgeübt wird. Dies kann beispielsweise dadurch erzielt werden, dass der innere Durchmesser des äußeren Ringes bei Raumtemperatur ein wenig kleiner ist als der äußere Durchmesser von bereits an einem Schaft angebrachten Segmenten. Dann wird der äußere Ring, und nur dieser, auf eine Temperatur oberhalb der Betriebstemperatur des Farbrades erhitzt. Wegen der thermischen Ausdehnung des äußeren Ringes kann dieser nun an den Segmenten angeordnet werden. Beim Abkühlen wird der äußere Ring die Tendenz haben seine Größe zu verkleinern und wird daher Kompressionsdruck auf die Segmente ausüben.

Da der äußere Ring mit kleiner werdender Temperatur in der Regel schneller abnimmt als die Größe der Filtersegmente, kann es von Vorteil sein, insbesondere wenn Temperaturen unter 0°C bis hin zu -20°C, -40°C oder darunter vorkommen können, Abstände zwischen den Segmenten vorzusehen oder diese bei den niedrigen Temperaturen zu assemblieren.

Die dritte Möglichkeit zielt auf die Verwendung von unterschiedlichen Materialien für den äußeren Ring und den Schaft ab, wobei der Unterschied sich insbesondere in den CTEs manifestiert.

Rostfreier Stahl für den äußeren Ring und Aluminium für den Schaft könnten beispielsweise verwendet werden. Wird alles bei Raumtemperatur zu einem Farbring assembliert, beispielsweise mit einem UV-härtenden Klebstoff, der bei Raumtemperatur aushärtet, dann hat die Erwärmung des Bauteils auf Betriebstemperatur den Effekt, dass der Stahlring sich weit weniger ausdehnt als der Aluminiumschaft, so dass die Filtersegmente komprimiert werden.

Die Erfindung ist, dadurch gekennzeichnet, dass zur Befestigung des Schaftes an den Filtersegmenten am Schaft elastische Mittel vorgesehen sind, die die Segmente radial nach aussen drücken.

Die Zeichnungen zeigen Folgendes:
- Figur 1: zeigt die isometrische Ansicht eines Querschnittes durch einen Farbring für ein Farbrad entsprechend der vorliegenden Erfindung. Gezeigt, mit gestrichelter Linie, ist zusätzlich die Halterung zum Assemblieren eines solchen Farbringes.
- Figur 2a: zeigt die Draufsicht eines Farbrings für ein Farbrad entsprechend einer zweiten Ausführungsform der vorliegenden Erfindung.
- Figur 2b: zeigt einen Querschnitt entlang der Linie A-A' aus Figur 2a
- Figur 2c: zeigt einen Querschnitt entlang der Linie A-A' aus Figur 2a
- Figur 3: zeigt den Zentralteil eines Querschnittes der Ausführungsform gemäß Figur 2a
- Figur 4: zeigt die schematische Ansicht eines Projektors gemäß der vorliegenden Erfindung, in dem ein erfindungsgemäßes Farbrad verwendet wird.

Mit Hilfe der Figuren und basierend auf unterschiedlichen Beispielen wird nun die Erfindung im Detail beschrieben.

Zuerst wird ein Beispiel gegeben, wie ein Farbrad gemäß der vorliegenden Erfindung hergestellt werden kann. Dann werden unterschiedliche Ausführungsformen von erfindungsgemäßen Farbrädern vorgestellt.

Typischerweise fängt der Prozess der Herstellung von Farbrädern damit an, die unterschiedlichen Einzelteile bereitzustellen. Benötigt werden Filtersegmente, ein Motor, ein Schaft und ein ringförmiger Träger.

### Herstellung der Filtersegmente

Substrate für Filtersegmente können beispielsweise gefärbte und oder beschichtete Glasplatten sein. Die erforderliche Geometrie der Filtersegmente kann durch unterschiedlichste Prozesse erzielt werden, darunter - jedoch nicht ausschliesslich - Bearbeitung, Laserschneiden und Ritz-Brechprozesse. Segmente, die aus diesen Prozessen hervorgehen haben oftmals Kanten, die senkrecht zu der Vorder- und Rückseite der planaren Segmente sind. Die Segmente haben oftmals die gleiche Krümmung für den äußeren Kreisbogen. Allerdings ist der "innere Kreisbogen" variabel und es kann sein, dass er sogar nicht die Form eines Kreisbogens aufweist. Die Geometrie des "inneren Kreisbogens" kann an den für die Rotation des Farbrings zu verwendenden Schaft angepasst sein. Filtersegmente haben oftmals unterschiedliche Winkelausdehnungen, die durch die radialen Kanten definiert werden.

### Herstellung des Schaftes

Schäfte können beispielsweise aus Metall herausgeformt oder gegossen werden. Schäfte weisen einen Bereich auf, der in Kontakt mit den Segmenten steht und sie weisen Bestandteile auf zur Anordnung am Motor.

Entsprechend einer Ausführungsform der vorliegenden Erfindung kann der Schaft sogar Bestandteil der Achse des Motors sein.

### Herstellung des Trägers

Im Folgenden wird der Träger durchgehend äußerer Ring genannt, im Gegensatz zu der Tatsache, dass die tatsächlich vorliegende Geometrie des Trägers zu einer Draufsicht führen kann, die deutlich von derjenigen eines Kreisringes abweicht.

Viele unterschiedliche Querschnitte sind denkbar für den äußeren Ring. Darunter sind flache Profile, L-förmige Profile mit und ohne flachen konzentrischen Ergänzungsring oder Ergänzungssektoren. U-förmige, unterbrochene U-förmige und V-förmige Profile sind beispielsweise auch denkbar.

Vorzugsweise ist das Material, aus dem der äußere Ring zumindest teilweise besteht, weniger brüchig als das Material der Filtersegmente. Metalle sind eine sehr gute Wahl und unter den Metallen ist Aluminium besonders geeignet. Allerdings können äußere Ringe auch aus Kunststoff geformt werden.

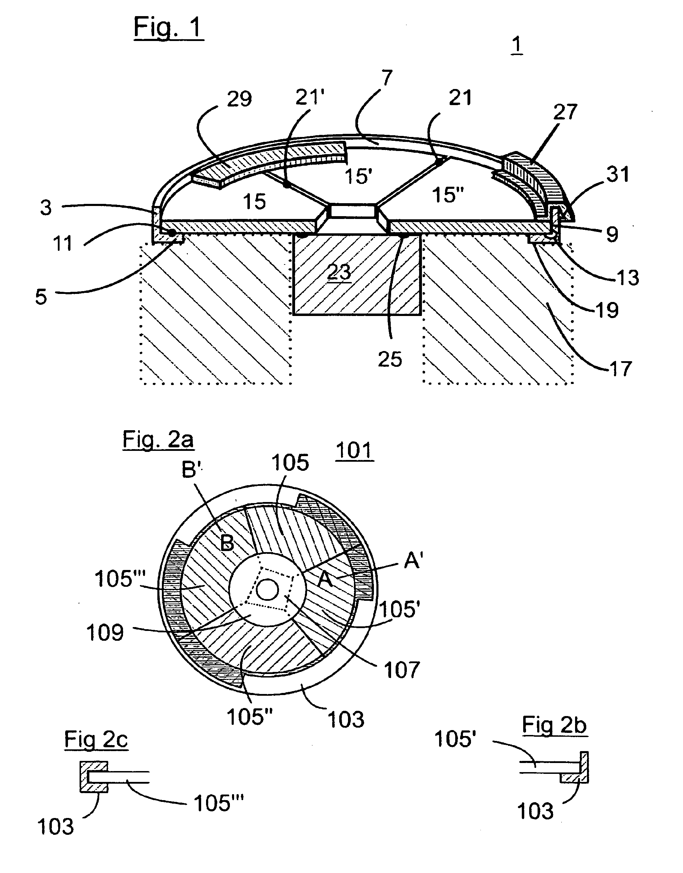

Figur 1 zeigt einen Farbring 1 zusammen mit einem (nicht gezeigten Motor). Ein L-förmiger äußerer Ring 3 ist für Filtersegmente die 0.7 mm dick sind, bereitgestellt. Es ist ein Aluminiumring mit äußerem Durchmesser von 60 mm, der an seiner breitesten Stelle in radialer Richtung 1.5 mm breit ist und in axialer Richtung 2 mm hoch ist.

Der Metallring hat eine Stufe 5, die eine Breite von 0.5 mm besitzt.

Dies führt zu dem L-förmigen Profil mit den Durchmessern 60 mm, 58 mm und 57 mm. Die Fläche des Mantels des Zylinders mit Durchmesser 58 mm stellt eine primäre Klebezone 9 dar. Die ringförmige Fläche, die die Oberseite der Stufe 5 ist, bildet eine sekundäre Klebezone 11. In der durch primäre Klebezone 9 und sekundäre Klebezone 11 gebildeten Ecke kann eine Einbuchtung 13 vorgesehen sein, in die Klebstoff eingefüllt werden kann. Dies hilft zusätzlich sicherzustellen, dass die Segmente formpassend in der Ecke sitzen. Ausserdem wird vermieden, dass Klebstoff hinausgepresst wird.

Der oben beschriebene Farbring wird folgendermassen hergestellt:

Es wird eine dünne Klebstoffschicht auf den äußeren Ring im Bereich der primären oder sekundären, oder beiden Klebezonen aufgetragen, gegebenenfalls vorzugsweise in die Einbuchtung 13.

Der Klebstoff wird vorzugsweise nicht entlang der vollen Länge der Rille aufgetragen, um Spannungen durch den Klebstoff, die aufgrund thermischer Ausdehnung der Segmente, des Klebstoffes und des äußeren Ringes auftreten könnten, zu minimieren. Es kann beispielsweise Klebstoff in Form einer gebrochenen Linie oder sogar diskreter Punkte aufgetragen werden.

In einer Variante liegen solche diskreten Punkte an den Endpunkten der äußeren Kreisbögen der Segmente, an denen zwei benachbarte Segmente zusammen kommen. In diesem Bereich ist der zur optischen Verwendung gedachte Bereich aufgrund des Übergangs zwischen den beiden Segmenten sowieso unterbrochen.

Andererseits vermutet man, dass Glasbruch zumeist durch die Ausbreitung von Mikrobrüchen von den Kanten in das Glas hinein stattfindet.

Daher wird gemäß einer weiteren Variante Klebstoff lediglich im Bereich der sekundären Klebefläche 11 aufgebracht und nicht im Bereich der primären Klebefläche. Dadurch wird vermieden, dass im Falle von Temperaturschwankungen der Klebstoff direkt Scherspannungen auf die Kanten der Segmente ausübt. In diesem Fall ist es von Vorteil, den Klebstoff in guter Distanz zu den Endpunkten des äußeren Kreisbogens der Segmente anzubringen, beispielsweise in der Mitte.

Der äußere Ring wird in eine Halterung 17 für Filtersegmente 15,15',15" gelegt. Die Halterung hat eine Aussparung 19, die beispielsweise über Materialentnahme erzielt wurde. Diese Aussparung ist geeignet, den äußeren Ring aufzunehmen und zwar derart, dass eine kreisringförmige Oberfläche nach Einbringen des äußeren Ringes auf selber Höhe wie die sekundäre Klebezone 11 ist. Die kreisringformige Oberfläche der Halterung 17 hat einen kleineren inneren Durchmesser als der äußere Durchmesser des anzubringenden Schaftes 23.

Die Filtersegmente 15, 15', 15" werden auf die kreisringförmige Oberfläche der Halterung gebracht und zur primären Klebezone des äußeren Ringes geschoben. Vorzugsweise haben die Segmente danach im Wesentlichen keinen Abstand zu dieser primären Klebezone 9.

Es ist möglich, die Segmente in engem Kontakt zueinander anzuordnen. Allerdings werden sie vorzugsweise, beispielsweise mit der Hilfe von Abstandsplättchen voneinander beabstandet angeordnet. Vorzugsweise beträgt bei Raumtemperatur, d.h. 20°C der Spalt zwischen den Segmenten zwischen 0.01 mm und 0.3 mm, ideal ist ein Abstand von um die 0.05 mm.

Die Abstandshalter werden verwendet, um einheitliche Spaltdicken 21, 21' zu erzielen. Diese Spalte tragen dazu bei zu verhindern, dass die Segmente über die radialen Kanten Spannungen aufeinander ausüben, wenn das Farbrad auf -20°C oder sogar auf -40°C abgekühlt wird und die Schrumpfung des Schaftes aufgrund eines größeren CTEs in größerem Maße vor sich geht als die Schrumpfung der Segmente.

Um das Assemblieren des Farbringes abzuschliessen, wird eine Klebeschicht auf einen Schaft 23 aufgetragen. Der Schaft kann eine Aussparung 25 zur Aufnahme des Klebstoffes umfassen. Der Schaft wird von unten in die Halterung eingesetzt und über die Klebeschicht mit mindestens einem der Segmente 15, 15', 15" in Kontakt gebracht.

Für die Frage, wo vorzugsweise Klebstoff auf dem Schaft 15 angebracht wird, um diesen mit den Segmenten 15, 15', 15" zu verkleben, können dieselben wie oben in Bezug auf Mikrobrüche angestellten Überlegungen in Betracht gezogen werden.

Aus dem Grund wird die Befestigung vorzugsweise nicht an die Kanten der Segmente 15, 15', 15" platziert, sondern eher an der Unterseite, etwas entfernt von den Kanten der Segmente 15, 15', 15".

Der Schaft wird dann am Ort gehalten und der entstehende Ring wird mittels UV-Bestrahlung fixiert. Es könnte auch eine Halterung für den Schaft 23 verwendet werden in Kombination mit einem Thermokleber oder einem anderen Kleber.

Der so entstandene Farbring wird von der Halterung genommen und in einen Heizschrank gelegt, um das Bauteil bei einer Temperatur, die der Betriebstemperatur der Farbrades entspricht oder darüber liegt, auszuhärten. Dadurch wird erzielt, dass bei der hohen Temperatur keine Dehnungsspannungen in den Segmenten vorhanden sind, wenn der Ring sich nicht dreht.

Aufgrund des toleranzfreien Kontaktes der Filtersegmente 15, 15', 15" mit der primären Klebezone 9 des äußeren Ringes ist die Befestigung der Filtersegmente 15, 15', 15" in Bezug auf Zentrifugalkräfte automatisch so starr, wie sie maximal sein kann.

Dies trifft für die Befestigung der Segmente an den Schaft 23 nicht zu. Aus diesem Grund ist sichergestellt, dass aufgrund einer Rotation radiale Kompressionskräfte auf alle Segmente ausgeübt werden.

Aufgrund der Spalte 21, 21' zwischen den Filtersegmenten wird erreicht, dass diese keine Scherkräfte bei niedrigen oder sehr niedrigen Temperaturen aufeinander ausüben.

Zusätzlich zum L-förmigen äußeren Ring kann deckelartig ein flacher, konzentrischer Ring (nicht gezeigt) oder einer oder eine Anzahl konzentrischer Ringsektoren 27, 29 angebracht werden, um die Filtersegmente zusätzlich am äußeren Ring zu fixieren. Solch ein Ring oder solche Ringsektoren können wiederum mit den Filtersegmenten verklebt werden.

Ein Ringsektor 27 kann aber auch mit dem äußeren Ring 3 mit Hilfe eines Schnappmechanismus verbunden werden. Dies ist dann gut möglich, wenn die Mantelfläche 7 leicht höher ist als die Filtersegmente 15, 15', 15" dick sind und über diese hinausragt, so wie in den Figur 1 gezeigt. Zusätzlich kann am äußeren Ring eine Nase 31 vorgesehen sein und der Ringsektor 27 dergestalt geformt sein, dass er sich um den äußeren Ring schmiegt und in die durch die Nase 31 gebildete Kante schnappt.

Um die Betriebslautstärke des Farbrades minimal zu halten wird bevorzugt nicht nur ein Ringsektor 27, sondern ein ganzer Schnappring verwendet.

Es kann mittels des beschriebenen Schnappmechanismus eine Befestigung der Segmente am äußeren Ring realisiert werden, die ganz ohne Klebstoff auskommt. Hierzu werden die Segmente in den äußeren Ring platziert und ein Schnappring darüber gestülpt. Dabei müssen allerdings noch Mittel vorgesehen werden, die verhindern, dass die Segmente gegeneinander verrutschen. Zu diesem Zweck können Abstandsplättchen dauerhaft zwischen den Segmenten im äußeren Ring vorgesehen sein. Vorzugsweise werden die Abstandsplättchen aus elastischem Material geformt. Besonders vorteilhaft ist es, wenn diese mit einem Kopf versehen werden, der formschlüssig in die hier ringförmige Einbuchtung 13 des äußeren Ringes eingebracht werden kann. Die Einbuchtung sollte dann so geformt sein, dass der Kopf der Abstandsplättchen in die Einbuchtung gedrückt werden kann und hineinschnappt. Auf diese Weise werden die Abstandsplättchen beim Ring gehalten und können dennoch entlang des Umfangs des äußeren Ringes verschoben werden. Dies entspricht dem Prinzip einer Schiene.

Figur 2a zeigt die Draufsicht eines Farbrades 101 entsprechend einer Ausführungsform der vorliegenden Erfindung. Der äußere Ring 103 hat das Profil einer unterbrochenen U-Form. Um dies deutlicher darzustellen zeigt Figur 2b einen Schnitt entlang der Linie A-A' und Figur 2c zeigt einen Schnitt entlang der Linie B-B'. In diesem Fall werden die Segmente 105, 105', 105" , 105", bei den L-förmigen Bereichen entsprechend A-A' eingesetzt und in die U-förmigen Bereiche entsprechend B-B' geschoben. Einer der L-förmigen Bereiche sollte mindestens so gross sein wie das grösste der Filtersegmente 105, 105', 105", 105"'. Die Filtersegmente können radial eingeschoben werden, weil sie zuerst mit dem äußeren Ring 103 verbunden werden, bevor sie am Schaft befestigt werden.

Figur 2 zeigt zusätzlich eine Möglichkeit für die Verbindung eines Schaftes mit den Segmenten 105, 105', 105", 105"', ohne dass dabei Klebstoff eingesetzt werden muss. In diesem Beispiel hat ein Teil des Schaftes 107 die Form eines Vierecks. Wie zuvor bereits beschrieben, kann der "innere Kreisbogen" der Segmente beträchtlich modifiziert sein. In dem vorliegenden Beispiel sind die "inneren Kreisbögen" dergestalt modifiziert dass die Segmente, wenn sie zusammengesetzt werden, die Viereckform des Schaftes 107 formschlüssig umschreiben. Da dies nicht mehr rotationssymmetrisch ist, führt die Rotation des Schaftes direkt zur Rotation der Segmente 105, 105', 105", 105"'.

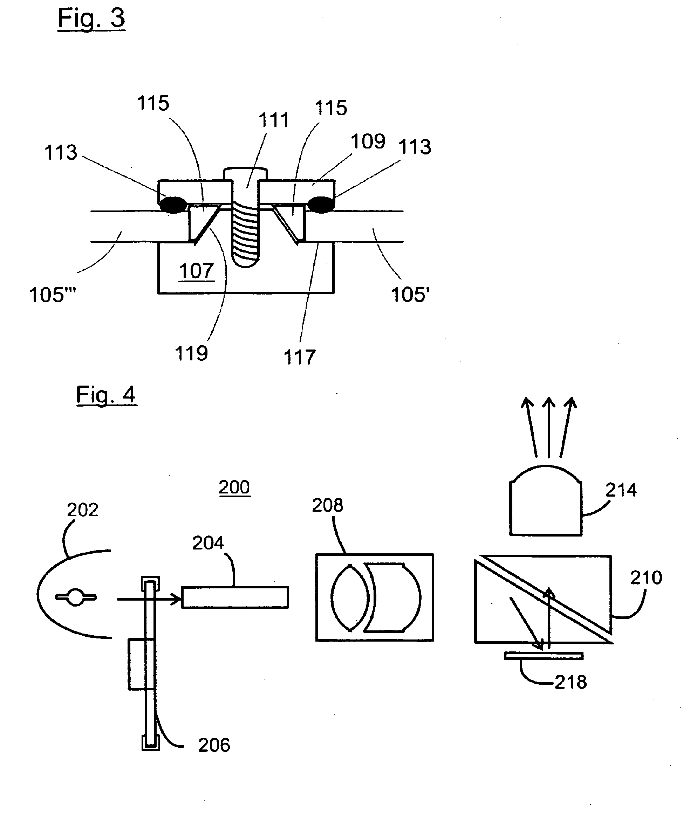

Figur 3 zeigt einen Querschnitt des Bauteils aus Figur 2. Es ist lediglich der zentrale Teil des Farbringes 101 gezeigt. Gezeigt ist der Schaft 107 sowie zwei der Filtersegmente 105', 105"'. Der Schaft hat eine Aussparung 117, in die die Filtersegmente passen. Die Seitenwände 119 der Aussparung 117 haben in diesem Beispiel eine leicht pyramidale Form, denn die den Wänden zugrunde liegende Grundfläche ist ein Viereck.

In seinem Zentrum ist im Schaft 107 ein Gewinde vorgesehen, welches das Gegenstück zur Schraube 111 eines Deckels 109 bildet. Der Deckel 109 hat auf seiner Unterseite elastische Elemente 113. Diese können beispielsweise aus elastischem Material bestehen oder eine elastische Form aufweisen. Wenn der Deckel 109 an den Schaft geschraubt wird, pressen die elastischen Elemente 113 die Filtersegmente nach unten. Zusätzlich sind an dem Deckel 109 elastische Keile 115 vorgesehen, die beim Einsetzen entlang der Seitenwände 119 der Aussparung 117 gleiten und damit die Filtersegmente radial nach aussen drücken.

Figur 4 zeigt einen Projektor 200. Solch ein System ist für den Einsatz als Front- oder Rückprojektor oder ähnlichem geeignet. Ein Beispiel einer gut geeigneten Anwendung ist der Fernseher.

Die Lampe 202 sorgt für Licht, welches im Integrator 204 integriert wird. Der Integrator 204 kann beispielsweise durch einen Tunnel mit nach innen zeigenden Spiegeln gebildet werden. Das Licht der Lichtquelle 102 wird dann viele Male von den Wänden reflektiert, so dass am Ausgang des Integrators ein homogenes rechteckiges Lichtfeld gebildet wird. Das Farbrad 206 ist dergestalt, dass es die richtige Farbe bereitstellt, wenn das Lichtventil (SLM = spacial light modulator) 218 entsprechend dieser Farbe geschaltet ist. Ohne Referenzzeichen gezeigt ist auch der äußere Ring am Farbrad 206. Vom Integrator aus gesehen stromabwärts sind Beleuchtungslinsen 208 angeordnet, die das gleichförmige Lichtfeld vom Integratorausgang über ein Prisma 210 auf das SLM 218 abbilden. Das räumlich modulierte Licht wird dann zur Projektionslinse 214 geschickt.

Die ganze vorliegende Beschreibung hat sich auf transmissive Farbräder bezogen. Allerdings kann dasselbe Prinzip auch auf Farbräder angewandt werden, die in Reflexion funktionieren. Wenn beispielsweise die Farbcharakteristik der Segmente durch Dünnfilm-Interferenzfilter erzielt wird, dann geschieht dies durch selektive Reflektion und Transmission. Ein solches transmissives Farbrad ist gleichzeitig auch ein reflektives Farbrad. Einige Projektoren arbeiten in einem solchen Reflektionsmodus. Das Prinzip der vorliegenden Erfindung kann auch vorteilhaft auf diese Farbräder angewandt werden und sollte daher als im Rahmen dieser Erfindung angesehen werden. Zusätzlich gibt es Farbräder, die nicht ausschliesslich transmittierende Segmente, sondern auch beispielsweise schwarze, lichtblockierende Segmente umfassen.

Die Figuren zeigen lediglich planare Filtersegmente. Allerdings sollte beachtet werden, dass die vorliegende Erfindung auch auf Farbräder angewendet kann, die Segmente umfassen, die nicht planar sind und beispielsweise Linsen oder andere Strukturen umfassen. Das Prinzip der vorliegenden Erfindung kann auch vorteilhaft auf diese Farbräder angewandt werden und sollte daher als im Rahmen dieser Erfindung angesehen werden.

## Patentansprüche

1. Farbrad mit Motor und an dem Motor angeordneten Farbring (101), wobei der Farbring einen Schaft (107), einen Träger (103) und eine Anzahl von Filtersegmenten (105, 105', 105") umfasst, die starr am Träger (103) angeordnet sind und die dazu vorgesehen sind in einen optischen Weg eingebracht zu werden;
wobei die Geometrie des Trägers (103) dergestalt ist, dass für seine Draufsicht Kreisringe existieren in deren Fläche die Draufsicht passt und der entsprechende Kreisring mit minimalem Flächeninhalt einen äußeren und einen inneren Radius definiert;
wobei jedes der Filtersegmente (105, 105', 105") transparent ist und jedes der Filtersegmente (105, 105', 105") radial in den Kreis mit innerem Radius hineinragt um zu einer transparenten ringförmigen Fläche beizutragen die daran angepasst ist, in den Lichtweg eingebracht zu werden dergestalt, dass bei Rotation des Farbringes die im Lichtweg eingebrachte Fläche transparent bleibt;
wobei der Schaft (107) am Motor angeordnet ist und zur Rotation des Farbrings (101) vorgesehen ist und eine zentrale Achse umfasst, um die er drehbar ist;
wobei zumindest eines der Filtersegmente (105, 105', 105") am Schaft angeordnet ist;
wobei die Anordnung am Schaft (107) in Bezug auf Fliehkräfte weniger starr ausgestaltet ist als die Befestigung der Filtersegmente (105, 105', 105") am Träger (103) dergestalt, dass sich eine Rotation des Farbringes kompressiv auf alle Filtersegmente auswirkt,
**dadurch gekennzeichnet, dass** zur Befestigung des Schaftes (107) an den Filtersegmenten (105, 105') am Schaft elastische Mittel (115) vorgesehen sind, die die Segmente radial nach aussen drücken.

2. Farbrad nach Anspruch 1 **dadurch gekennzeichnet, dass** zur Befestigung des Schaftes mechanische Mittel (109,111, 113) ohne Klebstoff vorgesehen sind.

## Claims

1. Colour wheel with motor and colour ring (101) arranged on the motor, wherein the colour ring comprises a shaft (107), a carrier (103) and a number of filter segments (105, 105', 105") which are rigidly arranged on the carrier (103) and are intended to be introduced into an optical path;
wherein the geometry of the carrier (103) is such that for its top view, circular rings exist in the area of which fits the top view and the corresponding circular ring with minimum area content defines an outer and an inner radius;
wherein each of the filter segments (105, 105', 105") is transparent and each of the filter segments (105, 105', 105") protrudes radially into the circle with inner radius in order to contribute to a transparent annular arca which is adapted to be introduced into the light path such that on rotation of the colour ring, the area introduced into the light path remains transparent;
wherein the shaft (107) is arranged on the motor and is intended for rotation of the colour wheel (101) and comprises a central axis about which it can be rotated; wherein at least one of the filter segments (105, 105', 105") is arranged on the shaft; wherein the arrangement on the shaft (107) in relation to centrifugal forces is designed less rigid than the fixing of the filter segments (105, 105', 105") on the carrier (103) such that a rotation of the colour ring has a compressive effect on all filter segments,
**characterised in that** to fix the shaft (107) to the filter segments (105, 105'), resilient means (115) are provided on the shaft which press the segments radially outward.

2. Colour wheel according to claim 1, **characterised in that** to fix the shaft, mechanical means (109, 111, 113) are provided without adhesive.

## Revendications

1. Roue de coupleurs ayant un moteur et un anneau de couleurs (101) arrange sur le moteur, dans laquelle l'anneau de couleurs comporte une tige (107), un support (103) et un certain nombre de segments filtrants (105, 105', 105") qui sont arrangés de manière rigide sur le support (103) et qui sont destinés à être introduits dans un chemin optique ;
dans laquelle la géométrie du support (103) est telle que, pour sa vue de dessus, des anneaux circulaires existent dans la zone dans laquelle s'adapte la vue de dessus et l'anneau circulaire correspondant au contenu de zone minimum définit un rayon extérieur et un rayon intérieur ;
dans laquelle chacun des segments filtrants (105, 105', 105") est transparent et chacun des segments filtrants (105, 105', 105") fait saillie dans le sens radial à l'intérieur du cercle au rayon intérieur afin de contribuer à une zone annulaire transparente qui est adaptée pour être introduite à l'intérieur du chemin lumineux de sorte que, lors de la rotation de l'anneau de couleurs, la zone introduite à l'intérieur du chemin lumineux reste transparente ;
dans laquelle la tige (107) est arrangée sur le moteur et est prévue à des fins de rotation de la roue de couleurs (101) et comporte un axe central autour duquel elle peut être mise en rotation ;
dans laquelle au moins un des segments filtrants (105, 105', 105") est arrangé sur la tige ;
dans laquelle l'arrangement sur la tige (107) relativement a des forces centrifuges est conçu pour être moins rigide que la fixation des segments filtrants (105, 105', 105") sur le support (103) de sorte qu'une rotation de l'anneau de couleurs a un effet de compression sur tous les segments filtrants,
**caractérisée en ce que**, pour fixer la tige (107) sur les segments filtrants (105,105'), des moyens élastiques (115) sont mis en oeuvre sur la tige pour comprimer les segments dans le sens radial vers l'extérieur.

2. Roue de couleurs selon a revendication 1, **caractérisée en ce que**, pour fixer la tige, des moyens mécaniques (109, 111, 113) sont mis en oeuvre sans adhésif.
